(19) **Europäisches Patentamt**

**European Patent Office**

**Office européen des brevets**

(11) **EP 0 909 947 B1**

(12) **EUROPÄISCHE PATENTSCHRIFT**

(45) Veröffentlichungstag und Bekanntmachung des Hinweises auf die Patenterteilung:
**09.07.2003 Patentblatt 2003/28**

(51) Int Cl.7: **G01N 21/64**

(21) Anmeldenummer: **98118580.4**

(22) Anmeldetag: **01.10.1998**

(54) **Optisches Messsystem zur Erfassung von Lumineszenz-oder Fluoreszenz-signalen**

Optical measurement system for detecting luminescence or fluorescence emissions

Système de mesure optique pour la détection d'émissions luminescentes ou fluorescentes

(84) Benannte Vertragsstaaten:
**AT BE CH CY DE DK ES FI FR GB GR IE IT LI LU MC NL PT SE**

(30) Priorität: **14.10.1997 DE 19745373**

(43) Veröffentlichungstag der Anmeldung:
**21.04.1999 Patentblatt 1999/16**

(73) Patentinhaber: BAYER AG
**51368 Leverkusen (DE)**

(72) Erfinder:
• **Paffhausen, Wolfgang Dr.**
**51381 Leverkusen (DE)**

• **Bechem, Martin Dr.**
**42111 Wuppertal (DE)**

(56) Entgegenhaltungen:
WO-A-98/23945     GB-A- 2 315 131
US-A- 3 101 411     US-A- 4 922 092
US-A- 5 247 392     US-A- 5 347 122

• **PATENT ABSTRACTS OF JAPAN vol. 013, no. 127 (P-848), 29. März 1989 & JP 63 298137 A (SOKEN:KK), 5. Dezember 1988**

**Beschreibung**

Die Erfindung geht aus von einem Meßsystem zur Detektion optischer Signale von Mikrotiterplatten, bei denen die signalgebenden Testobjekte auf einer Untersuchungsfläche eines planen Träger angeordnet sind, bestehend aus einer Abbildungsoptik, die die zu vermessenden Testobjekte derart verkleinert, daß alle Objekte auf einem zweidimensionalen lichtempfindlichen Bildsensor vollständig abgebildet werden. Die optischen Signale werden durch den Bildsensor in elektronische Bildsignale umgewandelt, die von einem Meßcomputer in bekannter Weise ausgewertet und weiterverarbeitet werden.

Unter 'Testobjekten' werden im Rahmen der Erfindung fluoreszente bzw. lumineszente und/oder fluoreszent- bzw. lumineszent-markierte, auf dem Träger bzw. in Mikrotiterplatten aufgebrachte Proben verstanden, in denen im Falle der Lumineszenz aufgrund molekularer Wechselwirkungen eine chemolumineszente oder biolumineszente Reaktion abläuft, bei der Photonen freigesetzt und nachgewiesen werden können, bzw. im Falle der Fluoreszenz aufgrund der Interaktion eines Fluoreszenzfarbstoffs, mit denen die Objekte markiert sind, bei geeigneter eingestrahlter Anregungsenergie eine Fluoreszenz entsteht, so daß Photonen freigesetzt und nachgewiesen werden können. Die Proben selbst können als gelöste chemische Komponenten vorliegen oder auch als biologische Testsysteme, wie etwa im Fall von enzymatischen Reaktionen, Antigen-Antikörper-Kopplungen, Protein-Bindungsassays, Ligand-Rezeptor-Wechselwirkungen oder Rezeptor-Assays. Dabei kann das biologische Testsystem als zellulärer Assay (adhärente oder Suspensionszellen, vornehmlich Säugerzellen, aber auch Pflanzenzellen, Bakterien, Pilze, Hefen oder Viren) ausgelegt sein oder auch aus subzellulären Bestandteilen, wie z.B. isolierten Zellkernen bzw. Cytoplasma Agglomeraten, oder auch aus künstlichen Trägern, wie z.B. Kunststoff-beads oder Glas-microspheres, auf denen biologisch aktives Material i.a. zelluläre oder subzelluläre Bestandteile, aufgebracht worden ist, bestehen, wobei durch die Interaktion verschiedener Komponenten ein optisches Signal in Form von Photonen freigesetzt wird.

Aus US 4,922,092 ist ein Meßsystem für die photonische Emission von chemischen Reaktionen im Bereich der Biochemie bekannt.Die Proben befinden sich in den 96 Löchern einer Mikrotiterplatte. Jedes einzelne Loch der Mikrotiterplatte ist separat über einen Lichtleiter optisch mit dem Eingangsfenster eines Bildverstärkers verbunden. Der Ausgang des Bildverstärkers ist an einen Photodetektor gekoppelt zur Erzeugung von elektrischen Signalen, die über einen Computer mit den entsprechende Löchern der Mikrotiterplatte korreliert werden. Die Lichtleiter können getapert sein, falls die Fläche des Eingangsfensters des Bildverstärkers kleiner ist als die Summe der Endflächen der Lichtleiter.

Aus US 5,347,122 ist ein Meßsystem für Lichtemission aus kleinen Regionen wie z.B. von einzelnen Zellen in einer Petri-Schale bekannt. Das durch den Boden der Petri-Schale emittierte Licht wird über ein Glasfaser-Taperelement zu einem optischen Detektor wie einem Lichtverstärker oder einer CCD-Kamera übertragen. Ein Luftspalt von z.B. 0,6 mm ist zwischen der detektorseitigen Stirnfläche des Glasfaser-Taperelements und dem Eintrittsfenster des optischen Detektors vorgesehen.

Ein Problem bei der Lumineszenz- bzw. Fluoreszenz-Messung in biologisch medizinischen Assays besteht häufig darin, daß die mit der biologischen Interaktion korrelierten optischen Signale im allgemeinen derart klein sind, daß biolumineszente bzw. biofluoreszente Ereignisse gewöhnlich nur mit Photomultipliern (Lichtverstärker) detektiert werden können. Im Grenzbereich der Nachweisbarkeit muß von Lumineszenzmeßsystemen (photon counting systems) Gebrauch gemacht werden.

Sollen z.B. Mikrotiter-Platten (MTP) mit den Abmessungen von ca. 130 mm x 86 mm, Tiefe ca. 10 - 14 mm, die 96, 384 oder 1536 Testlöcher enthalten, mit bildgebenden Verfahren gleichzeitig optisch vermessen werden, so sind hierfür zweidimensionale Lumineszenzmeßsysteme notwendig. Stand der Technik ist hierbei, die MTP über eine Linsenoptik auf die Photokathode eines Bildverstärkers (Eintrittsfenster) abzubilden und die auftreffenden Photonen nach einer lichtelektrischen Wandlung als Photoelektronen in einer Mehrkanalplatte (MCP=multi channel plate) zu verstärken. Die vervielfachten Elektronen treffen am Austrittsfenster des MCP's auf einen Leuchtphosphor und rufen dort ortsaufgelöst ein gegenüber dem Eingang um bis 1.000.000-fach verstärktes Lichtsignal hervor, das mit einer CCD-Sensor ortsaufgelöst detektiert werden kann.

Die Auswertung eines derart verstärkten Ausgangsbild kann mit Hilfe von bildverarbeitenden Prozessen (image-processing) erfolgen, wobei die Helligkeit in jedem Loch einer Mikrotiterplatte als Anzahl der registrierten Photonen-Ereignisse errechnet wird. Entsprechende Systeme sind von verschiedenen Firmen als sog. MTP-Reader im Handel. Für den Fall, daß die Intensitäten hinreichend groß sind und die Integrationszeit keine Rolle spielt, kann man anstelle des Bildverstärkers auch auf handelsübliche, gekühlte CCD-Systeme zurückgreifen.

Durch den Vergleich unterschiedlicher Lumineszenzmeßsysteme von verschiedenen Herstellern konnte nachgewiesen werden, daß Photonen, die auf der Photokathode ein Elektron erzeugen, mit den bekannten ein- bzw. zweistufig verstärkten Lumineszenzmeßsystemen detektiert werden können. Eine höhere Verstärkung nach der lichtelektrischen Wandlung, also hinter der Photokathode, führt zu keiner Steigerung der System-Empfindlichkeit.

Eine Empfindlichkeitssteigerung aufgrund einer höheren Quantenausbeute der Photokathode eines Bildverstärkers ist theoretisch möglich. Physikalische Grenzen und das Fehlen entsprechender Detektoren auf dem Markt bieten jedoch derzeit keinen technisch realisierbaren Ausweg.

Um die Abbildung eines Gegenstands, in dem hier beschriebenen Fall die Mikrotiterplatte, auf die Photokathode eines Bildverstärkers zu erzeugen, wird bei allen Herstellern eine lichtstarkes Objektiv benutzt. Einige Hersteller verwenden Standard-Photoobjektive, andere speziell korrigierte Objektive mit großer f-Zahl. Die besten bisher eingesetzten Hochleistungsobjektive haben mit einem Öffnungsverhältnis von ca. 1:1.0 und 50 mm Brennweite bereits eine sehr hohe Lichtstärke. Eine wesentlich lichtstärkere Optik ist aus physikalischen Gründen nicht konstruierbar.

Wegen der Dreidimensionalität der Mikrotiterplatte mit ihren ca. 10-14 mm tiefen Löchern muß bei der konventionellen optischen Abbildung wegen auftretender geometrischer Vignettierung an den Randlöchern eine Gegenstandsweite von ca. 70 cm (Abstand: MTP zum Bildsensor) eingehalten werden. Dementsprechend hoch muß ein Gehäuse sein, in dem die Mikrotiterplatte und das Detektions-System vollständig lichtdicht für das Lumineszenzmeßsystems integriert sind. Dieser geometrische Abstand r zwischen Lichtentstehung und Detektor wirkt sich besonders nachteilig im Hinblick auf die Systemempfindlichkeit aus, da die Intensität mit $1/r^2$ abnimmt. Das statistisch in einem Loch der Mikrotiterplatte entstehende Lichtquant verläßt das Loch diffus, so daß sich rein geometrisch nur ein Bruchteil (Oberfläche der Halbkugel mit Radius 70 cm im Verhältnis zur Öffnung des Objektives mit einem Durchmesser von 5 cm) von einigen Promille erfassen läßt. Mit konventionellen Abbildungsoptiken wie Linsen- oder auch Spiegelsystemen kann keine grundsätzliche Verbesserung in der System-Empfindlichkeit erreicht werden.

Um beim Screening von biologischen Testsystemen mit optischer Signalverarbeitung beim Test von einigen 100 000 Substanzen einen hohen Probendurchsatz in annehmbarer Zeit zu gewährleisten, muß auf bildgebende Verfahren wegen des Vorteils der Parallelverarbeitung, z.B. in Mikrotiterplatten, zurückgegriffen werden. Wegen der geringen Leuchtstärke der biolumineszenten bzw. biofluoreszenten Reaktionen sind für ein statistisch gesichertes Signal/ Rausch-Verhältnis im Photonenzähl-Betrieb häufig Integrationszeiten von einigen Minuten notwendig.

Um z.B. die Kapazität einer Robotor-Anlage zur Untersuchung von Lumineszenzoder Fluoreszenzsignalen in Mikrotiterplatten durch Herabsetzung der Integrationszeit für die Vermessung von Mikrotiterplatten zu erhöhen und/ oder z.B. die Anzahl von Zellen pro Testloch herabzusetzen und/oder teure Substratmengen für eine Enzymreaktion zu verkleinern, bestand die Aufgabe darin, die Empfindlichkeit der bekannten Lumineszenz- bzw. Fluoreszenzmeßsysteme zu erhöhen.

Diese Aufgabe wird mit einem optischen Meßsystem gemäß Anspruch 1 gelöst.

Vorzugsweise wird die Erfindung mit Hilfe einer Anordnung realisiert, bei der der Bildsensor einen Bildverstärker und eine Videokamera zur Umwandlung der verstärkten Bildsignale in elektronische Signale umfaßt und das Glasfaser-Taperelement so ausgelegt ist, daß ein das Eintrittsfenster des Bildverstärkers voll ausfüllendes verkleinertes Bild der Mikrotiterplatte erzeugt wird.

Um zu vermeiden, daß bei der Verwendung weißer Kunststoffträger eine lichtinduzierte Langzeitphosphoreszenz zu Falschlichtsignalen führt, wird vorteilhaft ein Bildverstärker verwendet, der eine Bialkaliphotokathode aufweist, dessen spektrale Empfindlichkeit bei Wellenlängen > 700 nm < 1 % seiner maximalen Empfindlichkeit ist.

Entsprechend einer bevorzugten Ausführung ist für die Mikrotiterplatte eine horizontal verfahrbare und vertikal verstellbare, schubladenartig ausgebildete Halterung vorgesehen, die nach dem horizontalen Einfahren so weit angehoben wird, daß das Glasfaser-Taperelement mit seiner großflächigen Stirnseite in direktem Kontakt mit der Mikrotiterplatte steht.

Vorteilhaft steht die kleinflächige Stirnseite des Glasfaser-Taperelements in direktem optischen Kontakt mit dem Eintrittsfenster des Bildverstärkers.

Das Eintrittsfenster des Bildverstärkers mit der nach innen liegenden Photokathode wird vorteilhaft als Glasfaserplatte mit einer numerischen Apertur NA=1.0 ausgerüstet, um eine effiziente optische und geometrisch hochaufgelöste Übertragung des Bildes von der Oberfläche des Glasfaser-Taperelements auf die Photokathode des Bildverstärkers zu gewährleisten.

Zur Minimierung von Reflexionsverlusten ist ferner vorgesehen, daß ein zwischen dem Glasfaser-Taperelement und dem Eintrittsfenster des Bildverstärkers verbleibender Luftspalt mit einem Ölfilm ausgefüllt ist, dessen Brechungsindex mit dem Brechungsindex der Taperelements übereinstimmt.

Zur Untersuchung von biofluoreszenten Objekten in einer Mikrotiterplatte wird die erfindungsgemäße Apparatur in der Weise abgewandelt, daß die Mikrotiterplatte einen optisch transparenten Boden aufweist, daß die schubladenartige Halterung als Rahmenkonstruktion ausgebildet ist und daß unterhalb der Mikrotiterplatte eine Lichtquelle zur Fluoreszanregung angeordnet ist, die ein zur optischen Achse schräg einfallendes Lichtbündel erzeugt.

Eine Weiterentwicklung der Erfindung ist dadurch gekennzeichnet, daß die gesamte Apparatur um eine horizontale Achse um 180° schwenkbar ist und folgende weitere Merkmale aufweist:

a) Die Mikrotiterplatte besitzt einen optisch transparenten Boden.

b) Die schubladenartige Schlittenhalterung für die Mikrotiterplatte ist als Rahmenkonstruktion ausgebildet.

c) Das Meßsystem weist zusätzlich ein Mikropippetiersystem auf, dessen Einzelpipetten den Testlöchern in der Mikrotiterplatte zugeordnet sind.

Eine derartige Anordnung erlaubt die in situ-Beobachtung der Lumineszenz von biologischen Objekten unter dem Einfluß eines hinzugefügten Reagens. Hierdurch sind kinetische Biolumineszenzuntersuchungen möglich, die das dynamische Wirkprofil von pharmakologisch aktiven Substanzen wiedergeben.

Mit der Erfindung werden folgende Vorteile erzielt:

- Im Vergleich zu herkömmlichen Mikrotiterplatten-Lumineszenzmeßsystemen ist das neue System um den Faktor 10 lichtempfindlicher. Auf diese Weise sind sehr lichtschwache biolumineszente Reaktionen überhaupt erst nachweisbar.

- Bei gleichem Signal/Rausch-Verhältnis läßt sich die Integrationszeit um den Faktor 10 erniedrigen. Alternativ kann bei gleichem Signal/Rausch-Verhältnis die Menge der biologischen Objekte (z.B. die Zellzahl/Mikrotiterplatten) um den Faktor 10 vermindert werden oder umgekehrt bei gleicher Substratmenge der Probendurchsatz um den Faktor 10 vergrößert werden.

- Bei gleichem Signal/Rausch-Verhältnis kann die Substratmenge, die in einer bio-chemischen Reaktion die zu detektierenden Photonen freisetzt, um den Faktor 10 erniedrigt werden .

- Bei gleichem Signal/Rausch-Verhältnis kann wegen der hohen Empfindlichkeit die Fluoreszenzfarbstoffkonzentration um den Faktor 10 gesenkt (Verringerung der Nebenwirkung auf das biologische System) bzw. die Meßzeiten um den Faktor 10 gekürzt (Reduzierung der Ausbleicheffekte) werden.

- Aufgrund der senkrechten Lichterfassung der Taperoptik an der Mikrotiterplatte treten keine Vignettierungseffekte auf.

- Aufgrund des kleinen Aufbaus des Systems infolge der geringen Bauhöhe der Taperoptik von ca. 16 cm im Vergleich zum Abstand bei der Linsenabbildung von ca. 70 cm läßt sich ein Wechsel von einem Aufsicht- zu einem Durchsicht-Meßverfahren ohne Umbauarbeiten durch eine 180°- Drehung des Systems um die Schwerpunktachse realisieren.

Im folgenden wird die Erfindung an Hand von Zeichnungen und Ausführungsbeispielen näher erläutert. Es zeigen:

Fig. 1    den prinzipiellen Aufbau des optischen Meßsystems

Fig.2a    eine schematische Ansicht eines Lumineszenzmeßsystems in der Grundstellung (TOP-Stellung)

Fig.2b    eine schematische Ansicht des Lumineszenzmeßsystems in einer gegenüber Fig. 2a um 180 ° gedrehten Stellung (BOTTOM-Stellung)

Fig. 3    den Aufbau des Meßsystems fiir lumineszente biologische Objekte

Fig. 4    eine Draufsicht einer Mikrotiterplatte

Fig. 5    die schubladenartige Halterung für die Mikrotiterplatte

Fig. 6    den prinzipiellen Aufbau eines Meßsystems zur Untersuchung fluoreszierender biologischer Objekte mit schräg einfallendem Anregungslicht

Fig. 7    den prinzipiellen Aufbau eines Lumineszenzmeßsystems in der BOTTOM-Stellung mit einer Pipettiereinrichtung zur Untersuchung dynamischer Vorgänge bei lumineszenten biologischen Objekten

Bei der Erfindung wird die Eigenschaft von Lichtleitern (Glas- oder Polymerfasern) genutzt, Lichtsignale, insbesondere auch einzelne Photonen, in einem weiten Spektralbereich zu übertragen. Durch eine geordnete Anordung vieler Fasern in einer xy-Fläche ist es möglich, ein Helligkeitsbild als Intensitäts-Rastergrafik an einem anderen Ort darzustellen (Bildleiter). Hierzu muß jeder Punkt xgi, ygi in der Gegenstandsebene g einem Punkt xbi, ybi in der Bildebene b entsprechen. Wird jede Faser des Bildleiters auf ihrem Weg von der Gegenstandsebene zur Bildebene geometrisch verjüngt, indem ihr Durchmesser verkleinert wird, so wird das Gegenstandsbild um den

$$\text{Faktor} = \text{Faserdurchmesser(Gegenstandsebene)} / \text{Faserdurchmesser (Bildebene)}$$

verkleinert bzw. wenn Gegenstands- und Bildebene vertauscht werden, vergrößert. Dieses auf Lichtleitern beruhende abbildende Element wird im Folgenden als Taper-Optik bzw. Taperelement bezeichnet. Derartige Elemente werden als optische Bildübertragungselemente industriell hergestellt. Weltweit gibt es zwei Herstellerfirmen, die in der Lage sind, großflächige Taperelemente, d.h. Glasfaserbündel bis zu einem Durchmesser von 147 mm zu bearbeiten und gemäß den Kundenspezifikationen in Bezug auf den gewünschten Verkleinerungsmaßstab fertigen. Eine wichtige abbildungsoptische Eigenschaft besteht darin, daß sowohl auf der Gegenstandsseite (große Stirnfläche des Taperelements), als auch auf der Bildseite (kleine Stirnfläche des Taperelements) die einzelnen Glasfasern parallel zur optischen Achse stehen und damit senkrecht in bzw. auf die signalgebenden Testobjekte gerichtet sind, wodurch die bei einer Linsenabbildung auftretenden störenden Vignettierungseffekte (Parallaxenfehler) vermieden werden.

Die Eingangsfenster der Bildverstärker-Photokathoden von kommerziellen Photon-Counting-Systemen haben einen Durchmesser von 12 mm, 18 mm, 25 mm oder 40 mm. Mit größer werdenden Fläche nimmt der Preis der Bildverstärker überproportional zu. Andererseits ist ein möglichst geringer Verkleinerungsfaktor fv für das Taperelement anzustreben, weil dessen Apertur und damit seine Leistung in der Übertragung optischer Signale mit 1/fv abnimmt. Als vertretbarer Kompromiß zwischen Kosten und Nutzen wurde bei der vorliegenden Erfindung ein Bildverstärker mit 25 mm Durchmesser gewählt. In diesem Fall ergibt sich eine rechnerische numerische Appertur von 0.167 entsprechend einem Öffnungswinkel von ca. 20 Grad im Vergleich zu dem viel kleineren Öffnungswinkel eines f 1:1,0-Objektives in einer Entfernung von 70 cm von 0.1 Grad.

Infolge dieses im Vergleich zu Linsen/Spiegel-Abbildungssystemen größeren Öffnungswinkels der Glasfaseroptik wird die Photonen-Sammeleigenschaft mit Hilfe des Taperelements um ein Vielfaches gegenüber der herkömmlichen Optik verbessert. Vergleichende Messungen mit dem besten bekannten Photon-Counting-System, einmal mit Linsenoptik (Leica Noctilux f 1:1.0) und zum anderen mit der Taperoptik ausgerüstet, beweisen eine Empfindlichkeitssteigerung um 1000 %. Die Empfindlichkeit eines Systems für die Übertragung von optischen Signalen konnte mit Hilfe der aus dem Glasfaser-Taperelement bestehenden Abbildungsoptik um den Faktor 10 gesteigert werden.

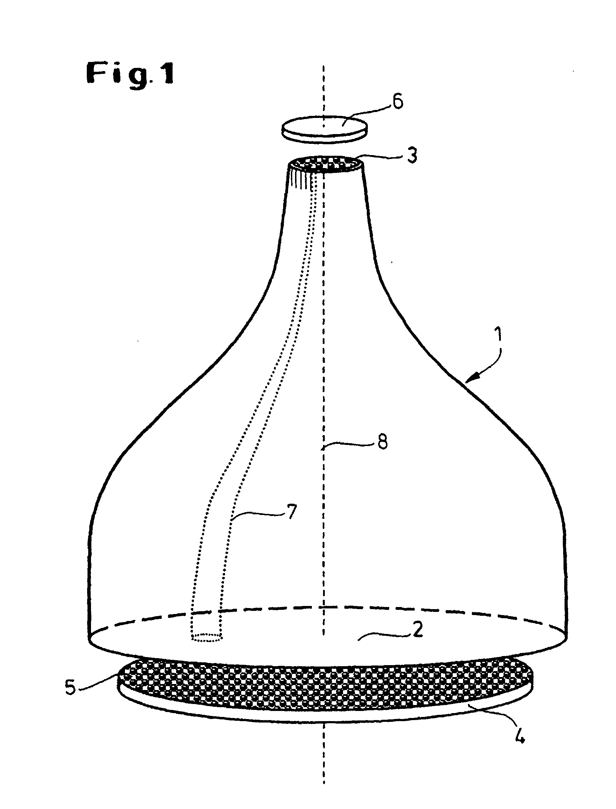

Der prinzipielle Aufbau des optischen Meßsystems ist aus Fig. 1 ersichtlich. Die wichtigste Komponente ist dabei das Glasfaser-Taperelement 1 mit einer großflächigen Stirnseite 2 und einer kleinflächigen Stirnseite 3. Der großen Stirnfläche 2 steht ein planarer Träger 4 mit den darauf angeordneten Testobjekten 5 und der kleinen Stirnfläche 3 ein Bildsensor 6 zur Erfassung und Weiterverarbeitung des verkleinerten Bildes der Trägeroberfläche mit den Testobjekten 5 gegenüber. Das Taperelement 1 hat annähernd eine glockenförmige Kontur. Die einzelnen Glasfasern 7 sind sowohl an der großen Stirnfläche 2, als auch an der kleinen Stirnfläche 3 parallel zur optischen Achse 8 und damit senkrecht zu den jeweiligen Flächen 2 und 3 orientiert.

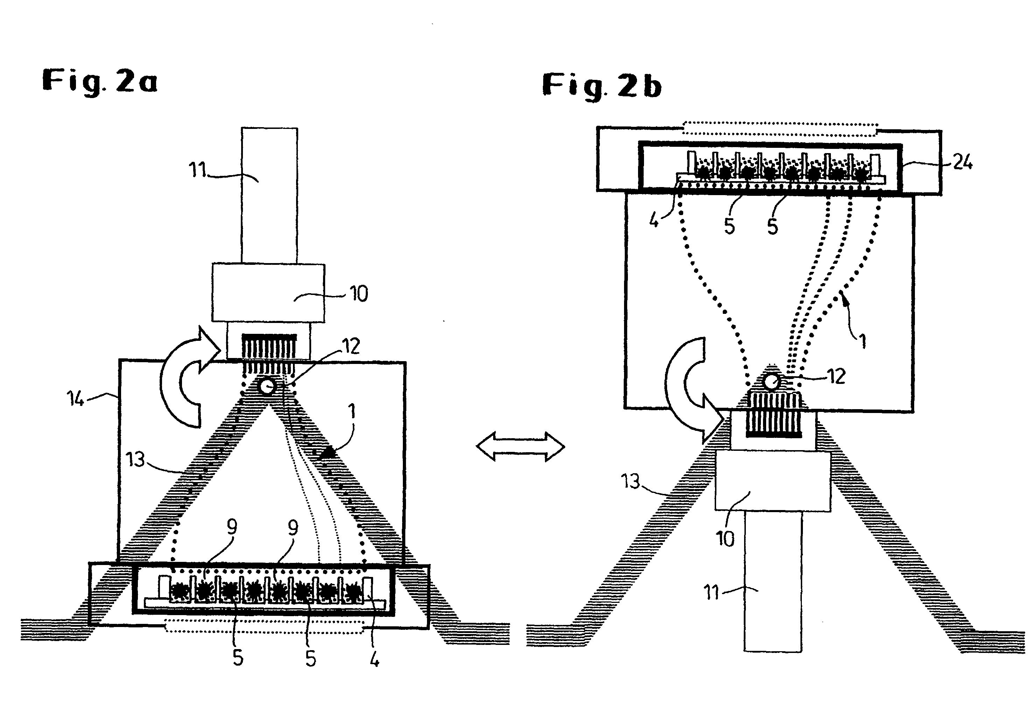

Gemäß Fig. 2a und 2b ist ein schwenkbares Lumineszenzmeßsystem dargestellt. Der Träger 4 ist hier eine Mikrotiterplatte mit Testlöchern 9 für die zu untersuchenden Objekte 5. Das Meßsystem besteht im Wesentlichen aus der Mikrotiterplatte 4, dem Glasfaser-Taperelement 1, einem Bildverstärker 10 und einer CCD-Kamera 11. Das ganze System ist um eine horizontale Drehachse 12 schwenkbar an einem feststehenden Gestell 13 angebracht. Das Taperelement 1 ist in einem lichtdichten Gehäuse 14 untergebracht. Die Position gemäß Fig. 2a entspricht der Grundstellung, bei der die Mikrotiterplatte 4 als unterstes Bauelement und die optischen Elemente 1,10,11 oberhalb davon angeordnet sind. Diese Position entspricht der sog. TOP-Meßposition. Im Gegensatz dazu ist in der Position gemäß Fig. 2b das ganze System um 180° um die Drehachse 12 geschwenkt. In diesem Fall befindet sich die Mikrotiterplatte 4 ganz oben und ist somit auch von oben her zugänglich, während die optischen Komponenten 1,10,11 unterhalb der Mikrotiterplatte 4 liegen. Diese Position entspricht der sog. BOTTOM-Meßposition. Bei der Schwenkung um 180 Grad wird also das lichtdichte Gehäuse 14 mit dem Taperelement 1 als Verkleinerungsoptik und dem angeflanschten Photodetektionssystem 10,11 als starre Einheit gedreht. Die großflächige Stirnseite des Taperelements 1 ist der Mikrotiterplatte 4 und seine kleinflächige Stirnseite dem Bildverstärker 10 zugewandt. Der Verkleinerungsfaktor des Taperelements 1 ist so gewählt, daß das verkleinerte Bild der Mikrotiterplatte 4 das Eintrittsfenster des Bildverstärkers 10 voll ausfüllt. Bei Meßsystemen dieser Art ist ein Verkleinerungsfaktor im Bereich von 1:2 bis 1:6 als optimal anzusehen.

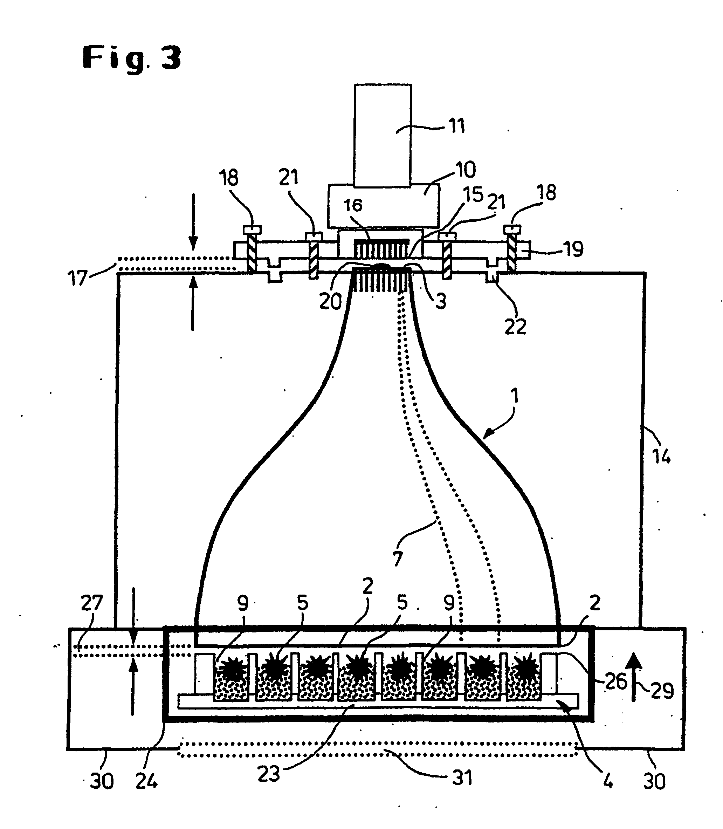

Der eigentliche Aufbau des optischen Systems ist aus Fig. 3 ersichtlich, in der wiederum die TOP-Position dargestellt ist. Bei der Einrichtung und Justierung des Systems muß das Glasfaser-Eintrittsfenster 15 am Bildverstärker 10 mit der kleinflächigen Stirnseite 3 des Taperelements 1 in Kontakt gebracht werden, um eine effiziente Übertragung der Taper-ausgangsseitigen Photonen auf die Photokathode 16 des Bildverstärkers 10 sicherzustellen.

Bei der Verwendung von weißen Kunststoff-Trägern, z.B. von weißen Mikrotiterplatten wird zweckmäßigerweise auf einen Bildverstärker mit einer Bialkali-Photokathode zurückgegriffen, weil auf Grund der speziellen spektralen Empfindlichkeit einer solchen Photokathode verhindert wird, daß die allen weißen Mikrotiterplatten anhaftende negative Eigenschaft einer lichtinduzierten Langzeitphosphoreszenz, die schwerpunktmäßig bei ca 800 nm auftritt, ein nicht erkennbares Falschlichtsignal und damit eine Empfindlichkeitsbegrenzung hervorruft. Da die Spektralempfindlichkeit der Bialkali-Photokathode oberhalb 700 nm praktisch Null ist, wird das von der Langzeitphosphoreszenz stammende Falschlicht unterdrückt.

Der Spalt 17 zwischen Taperelement 1 und dem Eingangsfenster 15 kann durch Justierschrauben 18 an der Kamera-Trägerplatte 19 in z-Richtung auf Null-Abstand gebracht werden. Dabei minimiert ein in den Spalt 17 eingebrachter, sich ausbreitender Öltropfen 20 die Reflexionsverluste durch Anpassung des Brechungsindex beim Übergang vom Taperelement 1 zum Detektionssystem 10,11. Das Öl hat in diesem Fall denselben Brechungsindex wie das Glas des Taperelements 1. Mit den Arretierschrauben 21 wird eine starre, über eine Lichtfalle 22 lichtdichte Verbindung zwischen dem Taperelement 1 und dem Bildverstärker 10 hergestellt.

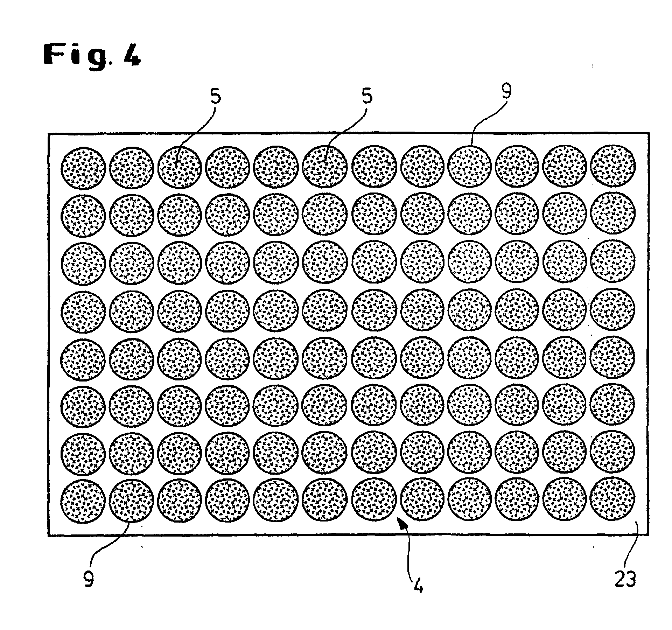

Die Mikrotiterplatte 4 (s. auch Fig. 4) weist eine Vielzahl zylindrischer oder rechteckiger Testlöcher 9 (sog. wells) zur Aufnahme der lumineszenten biologischen Objekte 5 auf. Der Boden 23 der Mikrotiterplatte 4 besteht als Spezialausführung für die BOTTOM-Anordnung (gem. Fig. 2b) aus einem optisch transparenten Material.

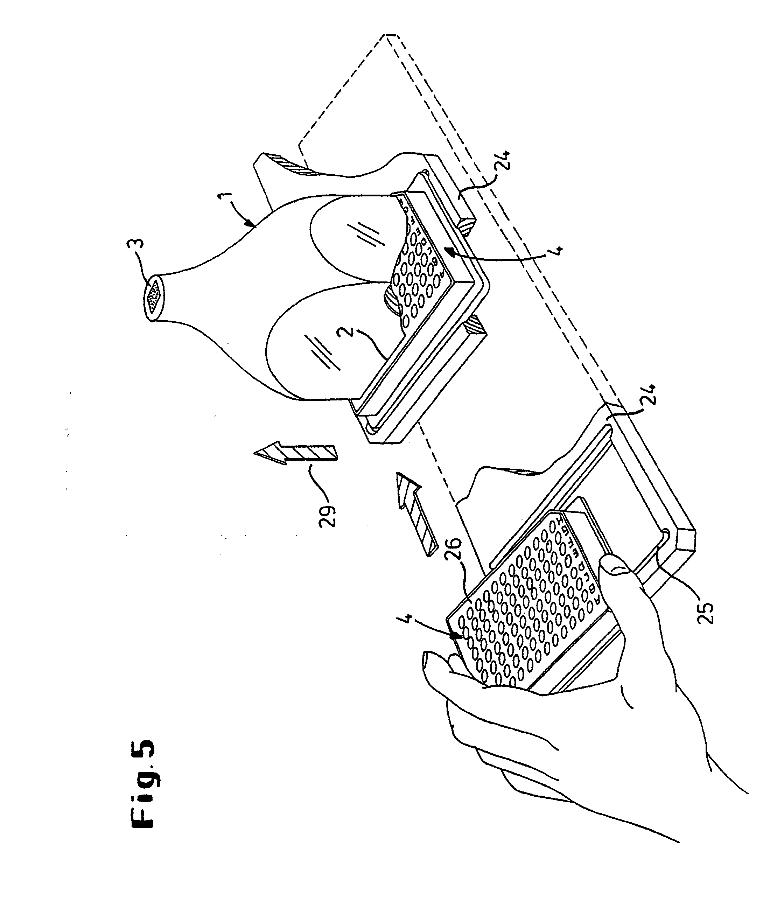

Anhand von Fig. 5 wird die schubladenförmige Halterung für die Mikrotiterplatte 4 näher erläutert. Die Beschickung der Meßapparatur mit der Mikrotiterplatte 4 erfolgt mit Hilfe einer ausfahrbaren Schublade 24, die so ausgebildet ist, daß sie zumindest für das BOTTOM-Meßverfahren in einer offenen Rahmenkonstruktion 25 die Mikrotiterplatten 4 aufnehmen kann, so daß die eigentliche Meßfläche nicht abgedeckt wird. Mit dem Ausfahren der Schublade 24 ist eine Unterbrechung der Hochspannung des Bildverstärkers 10 gekoppelt, um diesen vor Zerstörung durch zuviel Licht zu schützen. Bei dem Einfahren der Mikrotiterplatte 4 bleibt zunächst zwischen ihrer Oberfläche 26 und der großflächigen (hier unteren) Taperoberfläche 2 (s. Fig. 3) ein Spalt 27 von einigen Millimetern, um ein Anstoßen beim Einfahren und damit eine mögliche Beschädigung der Taperoberfläche 2 zu vermeiden. Um die Bedingungen für eine optimale Signaleinkopplung bei optimaler Ortsauflösung zu erfüllen, müssen die Mikrotiterplattenoberfläche 26 und die Taperoberfläche 2 in Kontakt gebracht werden. Dies geschieht mittels einer federnden Höhenverstellung 29 (in Fig. 3 und 5 nur schematisch angedeutet), mit der die Mikrotiterplatte 4 gegen das Taperelement 1 angehoben wird, nachdem die Mikrotiterplatte 4 genau unter der großen Stirnfläche 2 des Taperelements 1 positioniert wurde, die aber nach Überschreiten einer definierten Andruckkraft nachgibt. Hierdurch lassen sich Mikrotiterplatten 4 mit unterschiedlichen Höhenmaßen spielfrei an die Taperoberfläche 2 anpassen. Der Boden des die Schublade 24 umschließenden Gehäuseteils 30 enthält einen mit einer Blindplatte 31 verschließbaren Durchbruch (s. Fig. 3 ).

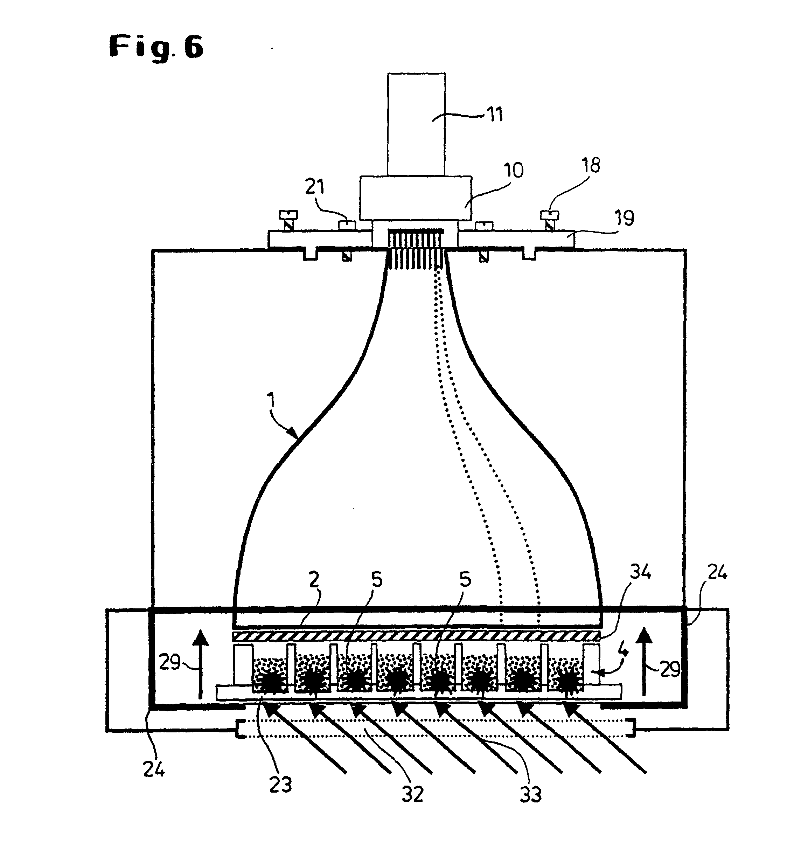

Gemäß Fig. 6 ist die Blindplatte entfernt und durch ein Fenster 32 ersetzt. Durch dieses Fenster kann in der TOP-Meßposition unter einem schrägen Einfallswinkel Fluoreszenzanregungslicht 33 eingestrahlt werden, um fluoreszierende Objekte untersuchen zu können. Bei dieser Anordnung ist der Boden 23 der Mikrotiterplatte 4 ebenfalls optisch transparent. Zwischen der großen Stirnfläche 2 des Taperelements 1 und der Mikrotiterplatte 4 ist ein auswechselbares, großflächiges, für das Fluoreszenzlicht selektives Interferenzfilter 34 angeordnet, um Störstrahlung vom Anregungslicht 33 zu unterdrücken. Die beschriebene Apparatur kann somit schnell und problemlos von einem Lumineszenzmeßsystem auf ein Fluoreszenzrneßsystem mit der gleichen hohen Empfindlichkeit umgerüstet werden.

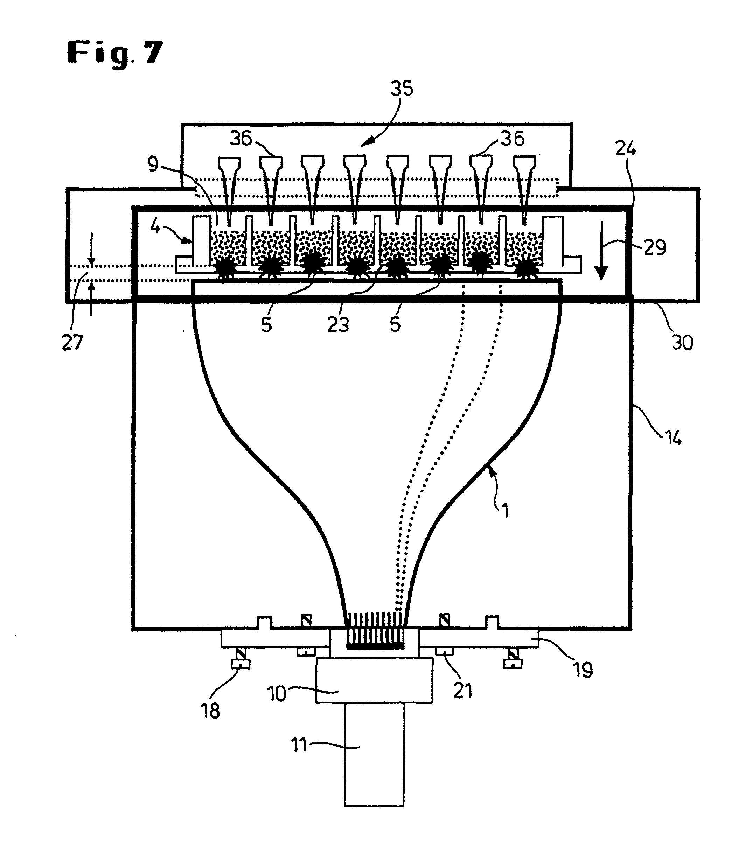

Eine weitere Ausbaumöglichkeit des Lumineszenzmeßsystems ist in Fig. 7 dargestellt. Die hier in die BOTTOM-Meßposition geschwenkte Apparatur ist zusätzlich mit einem Mikropipettiersystem 35 ausgestattet, das oberhalb der Mikrotiterplatte 4 angeordnet ist. Dabei sind die Einzelpipetten 36 den einzelnen Testlöchern 9 (Wells) der Mikrotiterplatte 4 zugeordnet. Die schubladenartige Halterung 24 für die Mikrotiterplatte 4 ist wie bei der zuvor beschriebenen Ausführung mit einem Rahmen 25 (s. Fig. 5) versehen, damit die Oberseite der Mikrotiterplatte 4 für das Mikropipettiersystem 35 und die Unterseite für die Beobachtung der Lumineszenz zugänglich ist. Der Boden 23 der Mikrotiterplatte 4 besteht wiederum aus einem optisch transparenten Material, um die Lumineszenzstrahlung der Proben 5 von der Unterseite her durch den Boden 23 zu beobachten. Diese Erweiterung erlaubt eine dynamische Untersuchung von lumineszenten biologischen Objekten z.B. unter dem Einfluß von Reaktionsflüssigkeiten, die über die Pipetten 36 zugeführt werden können. Auf diese Weise sind kinetische Biolumineszenz-Untersuchungen mit einer Zeitauflösung von 40 ms (Video-Norm) möglich, die das dynamische Wirkungsprofil von pharmakologisch aktiven Substanzen an den biologischen Objekten widerspiegeln. Bei schnell abklingenden Lumineszenzreaktionen des biologischen Systems in der Größenordnung einiger 100 ms bis 2 s lassen sich nur auf diese Weise Substanzeffekte untersuchen.

**Patentansprüche**

1. Meßsystem zur Detektion optischer Signale von Mikrotiterplatten, bei dem die signalgebenden Testobjekte (5) auf einer Untersuchungsfläche eines planen Trägers (4) angeordnet sind, bestehend aus

   a) einer Mikrotiterplatte (4) und
   b) einer Abbildungsoptik, die die zu vermessenden Testobjekte (5) derart verkleinert, daß alle Objekte auf einem zweidimensionalen, lichtempfindlichen Bildsensor (6) vollständig abgebildet werden, und die Abbildungsoptik aus einem Glasfaser-Taperelement (1) mit einer großflächigen (2) und einer kleinflächigen Stirnseite (3) besteht,

i) wobei das Glasfaser-Taperelement (1) aus einem Glasfaserbündel besteht, und

ii) die Glasfasern an den Stirnseitenflächen (2,3) senkrecht zur jeweiligen Stirnseitenfläche (2,3) orientiert sind,

iii) wobei der Bildsensor einen Bildverstärker (10) umfasst,

iv) wobei die Stirnseitenflächen (2,3) so gewählt sind, daß die großflächige Stirnfläche (2) mindestens der Untersuchungsfläche des Trägers (4) und die kleinflächige Stirnfläche (3) der Größe des Bildsensors (6) entspricht,

v) wobei sich aus dem Verhältnis der Stirnflächen (2,3) der Verkleinerungsmaßstab der Abbildungsoptik ergibt, um die Untersuchungsfläche des Trägers (4) vollständig auf den Bildsensor (6) abzubilden,

vi) wobei die kleinflächige Stirnseite (3) des Glasfaser-Taperelements (1) in direktem optischen Kontakt mit dem Eintrittsfenster (15) des Bildverstärkers (10) steht, und

vii) die Glasfasern des Glasfaserbündels dicht gepackt nebeneinander liegen,

**dadurch gekennzeichnet, dass**

c) zur Minimierung von Reflexionsverlusten ein zwischen dem Glasfaser-Taperelement (1) und dem Eintrittsfenster (15) des Bildverstärkers (10) verbleibender Luftspalt (17) mit einem Ölfilm (20) ausgefüllt ist, dessen Brechungsindex mit dem Brechungsindex des Taperelements (1) übereinstimmt und

d) der Glasfaserdurchmesser an der großflächigen Stirnseite $\leq 12$ μm beträgt.

**2.** Meßsystem nach Anspruch 1, **dadurch gekennzeichnet, dass** der Bildsensor (6) den Bildverstärker (10) und eine Videokamera (11) zur Umwandlung der verstärkten Bildsignale in elektronische Signale umfaßt, und daß das Glasfaser-Taperelement (1) ein das Eintrittsfenster (15) des Bildverstärkers (10) voll ausfüllendes verkleinertes Bild der Mikrotiterplatte (4) erzeugt.

**3.** Meßsystem nach Anspruch 1 bis 2, **dadurch gekennzeichnet, daß** der Bildverstärker (10) eine Bialkaliphotokathode aufweist, dessen spektrale Empfindlichkeit bei Wellenlängen > 700 nm < 1 % ist.

**4.** Meßsystem nach Anspruch 1 bis 3, **dadurch gekennzeichnet, daß** die Mikrotiterplatte (4) in einer horizontal verfahrbaren und vertikal verstellbaren, schubladenartigen Halterung (24) angeordnet ist, die nach dem horizontalen Einfahren so weit angehoben wird, daß das Glasfaser-Taperelement (1) mit seiner großflächigen Stirnseite (2) in direktem Kontakt mit der Oberfläche der Mikrotiterplatte (4) steht.

**5.** Meßsystem nach Anspruch 1 bis 4, **dadurch gekennzeichnet, daß** das Eintrittsfenster (15) des Bildverstärkers (10) durch eine Glasfaserplatte gebildet wird, die das Bild direkt auf die dahinterliegende Photokathode (16) des Bildverstärkers (10) überträgt.

**6.** Meßsystem nach Anspruch 1 bis 5, **dadurch gekennzeichnet, daß** die Mikrotiterplatte (4) einen optisch transparenten Boden (23) besitzt, daß die schubladenartige Halterung (24) als Rahmenkonstruktion (25) ausgebildet ist und daß unterhalb der Mikrotiterplatte (4) eine Lichtquelle zur Fluoreszenzanregung angeordnet ist, die ein zur optischen Achse schräg einfallendes Lichtbündel (33) erzeugt.

**7.** Meßsystem nach Anspruch 1 bis 5, **dadurch gekennzeichnet, daß** die gesamte Apparatur um eine horizontale Achse (12) um 180° schwenkbar ist und folgende weitere Merkmale aufweist:

a) Die Mikrotiterplatte (4) besitzt einen optisch transparenten Boden (23).

b) Die schubladenartige Halterung (24) für die Mikrotiterplatte (4) ist als Rahmenkonstruktion (25) ausgebildet.

Das Meßsystem weist zusätzlich ein Mikropipettiersystem (35) auf, dessen Einzelpipetten (36) den Testlöchern (9) in der Mikrotiterplatte (4) zugeordnet sind.

## Claims

**1.** Measurement system for detecting optical signals of microtitre plates, in which the signal-generating test objects (5) are arranged on an investigation surface of a planar carrier (4), comprising

a) a microtitre plate (4), and

b) an optical imaging arrangement which reduces the size of the test objects (4) to be measured in such a way that all the objects are imaged completely on a two-dimensional, photosensitive image sensor (6), and the optical imaging arrangement comprises a glass-fibre taper element (1) having a large-area (2) and a small-area end (3),

i) the glass-fibre taper element (1) comprising a glass-fibre bundle, and

ii) the glass fibres on the end surfaces (2, 3) being oriented perpendicularly to the respective end surface (2, 3),

iii) the image sensor comprising an image intensifier (10),

iv) the end surfaces (2, 3) being chosen such that the large-area end surface (2) corresponds at least to the investigation surface of the carrier (4) and the small-area end surface (3) corresponds to the size of the image sensor (6),

v) the ratio of the end surfaces (2, 3) producing the scale of reduction of the optical imaging arrangement in order to image the investigation surface of the carrier (4) completely onto the image sensor (6),

vi) the small-area end (3) of the glass-fibre taper element (1) being in direct optical contact with the entry window (15) of the image intensifier (10), and

vii) the glass fibres of the glass-fibre bundle being situated densely packed next to one another,

**characterized in that**

c) in order to minimize reflection losses, an air gap (17) remaining between the glass-fibre taper element (1) and the entry window (15) of the image intensifier (10) is filled with an oil film (20), whose refractive index corresponds to the refractive index of the taper element (1), and

d) the glass-fibre diameter at the large-area end is $\leq 12\ \mu m$.

2. Measurement system according to Claim 1, **characterized in that** the image sensor (6) comprises the image intensifier (10) and a video camera (11) for converting the intensified image signals into electronic signals, and **in that** the glass-fibre taper element (1) generates a reduced image of the microtitre plate (4) that fully fills the entry window (15) of the image intensifier (10).

3. Measurement system according to Claims 1 to 2, **characterized in that** the image intensifier (10) has a bialkali photocathode whose spectral sensitivity at wavelengths > 700 nm is < 1%.

4. Measurement system according to Claims 1 to 3, **characterized in that** the microtitre plate (4) is arranged in a horizontally movable and vertically adjustable, drawer-like mount (24), which, after horizontal retraction, is raised to an extent such that the large-area end (2) of the glass-fibre taper element (1) is in direct contact with the surface of the microtitre plate (4).

5. Measurement system according to Claims 1 to 4, **characterized in that** the entry window (15) of the image intensifier (10) is formed by a glass-fibre plate which transfer the image directly onto the photocathode (16) of the image intensifier (10) situated behind it.

6. Measurement system according to Claims 1 to 5, **characterized in that** the microtitre plate (4) has an optically transparent base (23), **in that** the drawer-like mount (24) is designed as a frame construction (25) and **in that** a light source for fluorescence excitation which generates a light pencil (33) of inclined incidence with respect to the optical axis is arranged underneath the microtitre plate (4).

7. Measurement system according to Claims 1 to 5, **characterized in that** the entire apparatus can be pivoted through 180° about a horizontal spindle (12) and has the following further features:

a) The microtitre plate (4) has an optically transparent base (23).

b) The drawer-like mount (24) for the microtitre plate (4) is designed as a frame construction (25).

The measurement system additionally has a micropipetting system (35) whose individual pipettes (36) are assigned to the test holes (9) in the microtitre plate (4).

**Revendications**

1. Système de mesure pour la détection de signaux optiques de plaques de microtitration, pour lequel les objets-tests émettant des signaux (5) sont disposés sur une surface d'examen d'un support planaire (4), constitué de

   a) une plaque de microtitration (4) et

   b) une optique de reproduction qui réduit les objets-tests à mesurer (5) de telle façon que tous les objets sont entièrement représentés sur un détecteur d'image (6) photosensible bidimensionnel et que l'optique de reproduction est constituée d'un élément effilé (1) en fibres de verre avec une face frontale de grande surface (2) et une face frontale de petite surface (3),

   i) l'élément effilé en fibres de verre (1) étant constitué d'un faisceau de fibres de verre, et

   ii) les fibres de verre aux faces frontales (2, 3) étant orientées perpendiculairement à la surface respective de la face frontale (2, 3),

   iii) le détecteur d'image comprenant un amplificateur d'image (10),

   iv) les surfaces frontales (2, 3) étant sélectionnées de telle façon que la surface frontale de grande surface (2) correspond au moins à la surface d'examen du support (4) et la surface frontale de petite surface (3) à la taille du détecteur d'image (6),

   v) le rapport des surfaces frontales (2, 3) fournissant l'échelle de réduction de l'optique de reproduction, afin de reproduire entièrement la surface d'examen du support (4) sur le détecteur d'image (6),

   vi) la face frontale de petite surface (3) de l'élément effilé en fibres de verre (1) étant en contact optique direct avec la fenêtre d'entrée (15) de l'amplificateur d'image (10), et

   vii) les fibres de verre du faisceau de fibres de verre étant disposées étroitement serrées l'une à côté de l'autre,

   **caractérisé en ce que**

   c) afin de minimiser les pertes par réflexion, un interstice (17) subsistant entre l'élément effilé en fibres de verre (1) et la fenêtre d'entrée (15) de l'amplificateur d'image (10) est rempli d'un film d'huile (20) dont l'indice de réfraction correspond à l'indice de réfraction de l'élément effilé (1) et

   d) le diamètre des fibres de verre à la face frontale de grande surface est ≤ 12 μm.

2. Système de mesure suivant la revendication 1, **caractérisé en ce que** le détecteur d'image (6) comprend l'amplificateur d'image (10) et une caméra vidéo (11) de conversion des signaux d'image renforcés en signaux électroniques, et **en ce que** l'élément effilé en fibres de verre (1) génère une image réduite de la plaque de microtitration (4) remplissant entièrement la fenêtre d'entrée (15) de l'amplificateur d'image (10).

3. Système de mesure suivant la revendication 1 ou 2, **caractérisé en ce que** l'amplificateur d'image (10) présente une photocathode bialcaline, dont la sensibilité spectrale pour les longueurs d'onde > 700 nm est < 1 %.

4. Système de mesure suivant la revendication 1 à 3, **caractérisé en ce que** la plaque de microtitration (4) est disposée. dans un support (24) coulissant horizontalement et réglable en hauteur, similaire à un tiroir, lequel est soulevé de telle façon après l'introduction à l'horizontale que l'élément effilé en fibres de verre (1) est en contact direct avec la surface de la plaque de microtitration (4) par sa face frontale de grande surface (2).

5. Système de mesure suivant la revendication 1 à 4, **caractérisé en ce que** la fenêtre d'entrée (15) de l'amplificateur d'image (10) est formée par une plaque de fibres de verre, qui transmet directement l'image à la photocathode (16) située derrière elle de l'amplificateur d'image (10).

6. Système de mesure suivant la revendication 1 à 5, **caractérisé en ce que** la plaque de microtitration (4) possède un fond optiquement transparent (23), **en ce que** le support en forme de tiroir (24) est conçu sous la forme d'une ossature (25) et **en ce qu'**en dessous de la plaque de microtitration (4) est disposée une source de lumière d'excitation de la fluorescence, qui génère un faisceau de lumière (33) d'incidence oblique par rapport à l'axe optique.

7.  Système de mesure suivant la revendication 1 à 5, **caractérisé en ce que** l'ensemble de l'appareil peut pivoter de 180° autour d'un axe (12) horizontal et présente les caractéristiques supplémentaires suivantes:

a) la plaque de microtitration (4) possède un fond (23) optiquement transparent.

b) le support de chariot en forme de tiroir (24) pour la plaque de microtitration (4) est conçu comme une ossature (25).

Le système de mesure présente en outre un système de micropipetage (35) dont les pipettes individuelles (36) correspondent aux trous de test (9) dans la plaque de microtitration (4).

**Fig.1**

# Fig. 2a

# Fig. 2b

EP 0 909 947 B1

# Fig. 3

# Fig. 4

Fig.5

# Fig. 6

**Fig. 7**